# EUROPEAN PATENT APPLICATION

(11) **EP 4 813 873 A1**
(43) Date of publication of application: **30.09.2026**
(21) Application number: 25751200.4
(22) Date of filing: 21.01.2025
(51) Int. Cl.: B65G 1/04, F26B 9/06

(54) **STORAGE UNIT FOR RACK, RACK, AND WAREHOUSING SYSTEM**

(30) Priority: 06.02.2024 CN 202420286958 U
(71) Applicant: Guangdong Lead Intelligent Logistics Technology Co., Ltd., Zhuhai, Guangdong 519000 (CN)
(72) Inventor: XIONG, Hao, Zhuhai, Guangdong 519000 (CN)
(74) Representative: Rau, Schneck & Hübner Patentanwälte Rechtsanwälte PartGmbB
(86) International application number: PCT/CN2025/073707
(87) International publication number: WO 2025/167598

(57) **Abstract**

The disclosed subject matter relates to a storage unit for a rack, a rack, and a warehousing system. The storage unit includes a frame (1), one side of the frame forming an opening (11); a door frame (2), the door frame being fixed to the opening; a door body (3), the door body being detachably connected to the door frame, so as to form a closure of the opening by means of the door frame and the door body. The sealing performance inside the storage unit can be improved.

## Description

This disclosure claims priority to Chinese patent application No. 202420286958.0, filed with the China National Intellectual Property Administration on February 6, 2024, and entitled "Storage Unit for Rack, Rack, and Warehousing System", the entire contents of which are incorporated by reference in this disclosure.

### TECHNICAL FIELD

The present disclosure relates to a storage unit for a rack, a rack, and a warehousing system.

### BACKGROUND

In the production and transfer processes of some products, it is necessary to place the products in a rack. Taking a battery production process as an example, batteries are left to stand under a certain temperature requirement to ensure the stability of battery performance.

When left to stand, the batteries are placed on a rack via trays. However, the rack has low sealing performance, resulting in the batteries being easily affected by factors such as external temperature and pressure, which affects the stability of battery performance.

### SUMMARY

An object of the present disclosure is to provide a new technical solution for a storage unit for a rack, a rack, and a warehousing system.

According to a first aspect of the present disclosure, there is provided a storage unit for a rack, including:
a frame, one side of the frame forming an opening;
a door frame, the door frame being fixed to the opening;
a door body, the door body being detachably connected to the door frame, so as to form a closure of the opening by means of the door frame and the door body.

Optionally, a connecting member is provided on the door frame, a mating member is provided on the door body, and the mating member is in limiting fit with the connecting member.

Optionally, a plurality of connecting members are provided on the door frame, the plurality of connecting members being symmetrically distributed on two sides of the door frame; and
a plurality of mating members are provided on the door body, the plurality of mating members being symmetrically distributed on two sides of the door body and protruding from side edges of the door body.

Optionally, the connecting member is a hook, and the mating member is a mating rod; and
a groove is formed on the hook, one end of the mating rod being fixed to a peripheral side of the door body, the other end of the mating rod protruding from the side edge of the door body and being embedded and fitted in the groove.

Optionally, the connecting member is a connecting block, and the mating member is an insertion rod; and
an insertion hole is provided on the connecting block, one end of the insertion rod being fixed to a peripheral side of the door body, the other end of the insertion rod protruding from the side edge of the door body and being inserted and fitted in the insertion hole.

Optionally, a connecting shaft is provided on the door body, the connecting shaft being adapted to be connected to a stacker crane, so as to cause the door body to switch between an open position and a closed position; and
when the door body is in the open position, the mating member is disengaged from the connecting member; and when the door body is in the closed position, the mating member is in limiting fit with the connecting member.

Optionally, a bearing structure is provided within the frame, the bearing structure being used for bearing a battery tray.

According to a second aspect of the present disclosure, there is provided a rack, including a plurality of storage units, the storage units being the storage unit according to the first aspect.

Optionally, the plurality of openings of the plurality of storage units are located on the same side of the rack; and
the plurality of door frames are correspondingly fixed to the plurality of openings, and adjacent door frames abut against each other.

Optionally, the plurality of door bodies are correspondingly connected to respective sides of the plurality of door frames facing away from the frame, and adjacent door bodies are spaced apart from each other; and
a door opening is provided within the door frame, the area of the door frame being greater than the area of the opening, the area of the door body being greater than the area of the door opening, and the door body being capable of closing the door opening.

Optionally, the rack includes a plurality of vertical columns and a plurality of crossbeams, the plurality of vertical columns and the plurality of crossbeams being connected to each other in a crisscross pattern to form the frame.

According to a third aspect of the present disclosure, there is provided a warehousing system, including a stacker crane and the rack according to the second aspect, the stacker crane being capable of being connected to the door body and causing the door body to switch between an open position and a closed position.

One technical effect of the present disclosure is as follows:
The embodiments of the present disclosure provide a storage unit for a rack. The storage unit includes a frame, one side of the frame forming an opening; a door frame, the door frame being fixed to the opening; and a door body, the door body being detachably connected to the door frame, so as to form a closure of the opening by means of the door frame and the door body, thereby being capable of improving the sealing performance inside the storage unit.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated in and constitute a part of the specification, illustrate embodiments of the present disclosure, and together with the description thereof, serve to explain the principles of the present disclosure.
Fig. 1 is a perspective view of a rack according to an embodiment of the present disclosure;
Fig. 2 is a perspective view of another rack according to an embodiment of the present disclosure;
Fig. 3 is an internal schematic view of another rack according to an embodiment of the present disclosure;
Fig. 4 is a perspective view of another rack according to an embodiment of the present disclosure (excluding the door body);
Fig. 5 is a schematic view showing the cooperation of a door frame and a door body in a storage unit for a rack according to an embodiment of the present disclosure;
Fig. 6 is a schematic view of a door frame in a storage unit for a rack according to an embodiment of the present disclosure;
Fig. 7 is a schematic view of a door body in a storage unit for a rack according to an embodiment of the present disclosure;
Fig. 8 is a front view of a door body in a storage unit for a rack according to an embodiment of the present disclosure;
Fig. 9 is a front view of a rack according to an embodiment of the present disclosure;
Fig. 10 is a cross-sectional view taken along line A-A in Fig. 9.

In which:
1: frame; 11: opening; 2: door frame; 21: connecting member; 22: door opening; 3: door body; 31: mating member; 32: connecting shaft; 4: bearing structure; 5: battery tray;
100: rack; 101: vertical column; 102: crossbeam.

### DETAILED DESCRIPTION

Various exemplary embodiments of the present disclosure will now be described in detail with reference to the accompanying drawings. It should be noted that, unless otherwise specifically specified, the relative arrangements of components and steps, numerical expressions, and numerical values set forth in these embodiments do not limit the scope of the present disclosure.

Embodiments of the present disclosure will be described in detail below, examples of which are illustrated in the accompanying drawings. The embodiments described below with reference to the accompanying drawings are exemplary, are only for explaining the present disclosure, and shall not be construed as limiting the present disclosure. All other embodiments obtained by a person of ordinary skill in the art based on the embodiments of the present disclosure without creative efforts shall fall within the scope of protection of the present disclosure.

The features of the terms "first", "second" in the specification and claims of the present disclosure may explicitly or implicitly include one or more of such features. In the description of the present disclosure, unless otherwise stated, "a plurality of" means two or more. In addition, "and/or" in the specification and claims means at least one of the connected objects, and the character "/" generally indicates that the associated objects are in an "or" relationship.

In the description of the present disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., indicating orientations or positional relationships, are based on the orientations or positional relationships shown in the accompanying drawings, and are only for the convenience of describing the present disclosure and simplifying the description, but do not indicate or imply that the device or element referred to must have a specific orientation, be constructed and operate in a specific orientation, and therefore shall not be construed as limiting the present disclosure.

In the description of the present disclosure, it should be noted that, unless otherwise explicitly specified and limited, the terms "installed", "connected", "connection" should be understood in a broad sense. For example, it may be a fixed connection, a detachable connection, or an integral connection; it may be a mechanical connection or an electrical connection; it may be a direct connection, an indirect connection through an intermediate medium, or internal communication between two elements. For a person of ordinary skill in the art, the specific meanings of the above terms in the present disclosure can be understood according to specific circumstances.

It should be noted that like reference numerals and letters denote like items in the following drawings, and thus once an item is defined in one drawing, it need not be further discussed in subsequent drawings.

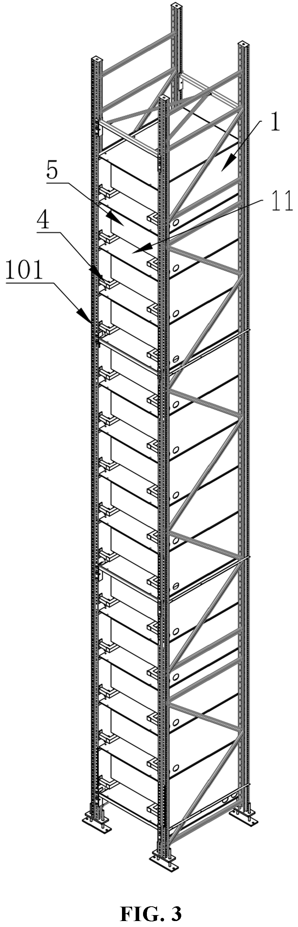

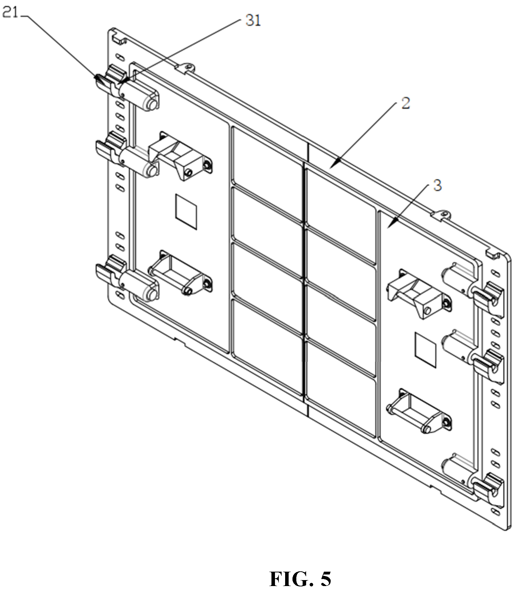

Referring to Figs. 3 and 5, an embodiment of the present disclosure provides a storage unit for a rack. The storage unit comprises:
a frame 1, one side of the frame 1 forming an opening 11;
a door frame 2, the door frame 2 being fixed to the opening 11;
a door body 3, the door body 3 being detachably connected to the door frame 2, so as to form a closure of the opening 11 by means of the door frame 2 and the door body 3.

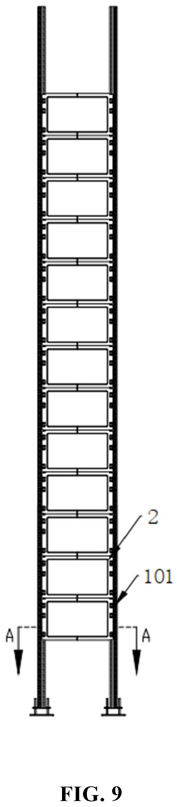

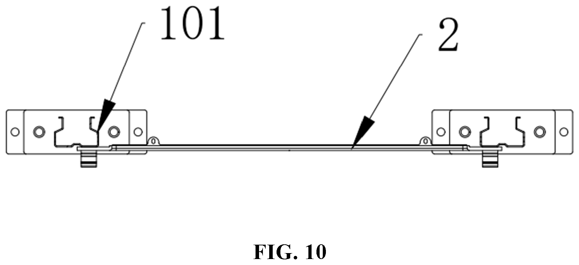

In this embodiment, the frame 1 is used for storing products therein. The frame 1 may form a skeleton structure of the storage unit to ensure the structural stability of the storage unit; and the frame 1 comprises three side plates, a top plate and a bottom plate. After five-side sealing is formed by the three side plates, the top plate and the bottom plate on the frame 1, only the opening 11 on one side is left, so as to facilitate the installation of the door frame 2. The door frame 2 is fixed to the opening 11. For example, the door frame 2 may be welded and fixed to an edge of the opening 11, or the door frame 2 may be fixed to the edge of the opening 11 by screws (see Figs. 9 and 10).

Referring to Fig. 5, the door body 3 is detachably connected to the door frame 2. When the door body 3 is connected to the door frame 2, the opening 11 can be closed by means of the door body 3 and the door frame 2, ensuring the fire resistance and thermal insulation of the storage unit and avoiding the risk of fire propagation between adjacent storage units. When the door body 3 is detached from the door frame 2, products in the frame 1 can be loaded into and unloaded from through the opening 11, facilitating the storage and replacement of products in the storage unit.

When the opening 11 is closed by means of the door frame 2 and the door body 3, the sealing performance inside the storage unit can be improved, ensuring the stability of products in the storage unit.

Specifically, the storage unit can be used for storing products such as batteries or circuit boards. Thus, while facilitating product storage and ensuring low cost, the door body 3 closes the space inside the storage unit, improving the sealing performance during storage and thereby enhancing the performance stability of products such as batteries or circuit boards.

The storage unit provided by the embodiment of the present disclosure comprises the frame 1, one side of the frame 1 forming the opening 11; the door frame 2, the door frame 2 being fixed to the opening 11; and the door body 3, the door body 3 being detachably connected to the door frame 2 so as to close the opening 11, thereby being capable of improving the sealing performance inside the storage unit and ensuring the stability of products in the storage unit.

In one embodiment, referring to Figs. 5 to 7, a connecting member 21 is provided on the door frame 2, a mating member 31 is provided on the door body 3, and the mating member 31 is in limiting fit with the connecting member 21.

In this embodiment, a limiting groove or a limiting hole may be formed on the connecting member 21, and a mating portion on the mating member 31 may be limited in the limiting groove or the limiting hole on the connecting member 21, so as to ensure the connection stability between the door body 3 and the door frame 2; the limiting fit between the mating member 31 and the connecting member 21 provides an accurate closed position for the door body 3, so as to close the opening 11 by means of the door frame 2 and the door body 3, thereby ensuring the sealing performance inside the storage unit.

In one embodiment, a plurality of mounting positions are provided on the door frame 2, and the connecting member 21 may be detachably connected to one of the mounting positions, so as to adjust the mounting position of the connecting member 21 and facilitate flexible connection between the door body 3 and the door frame 2.

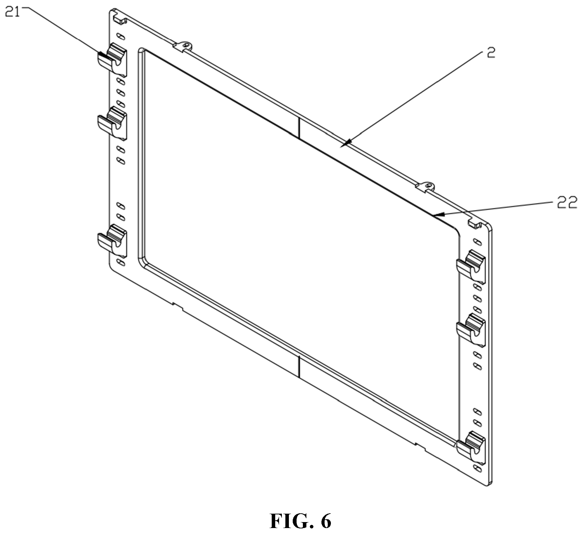

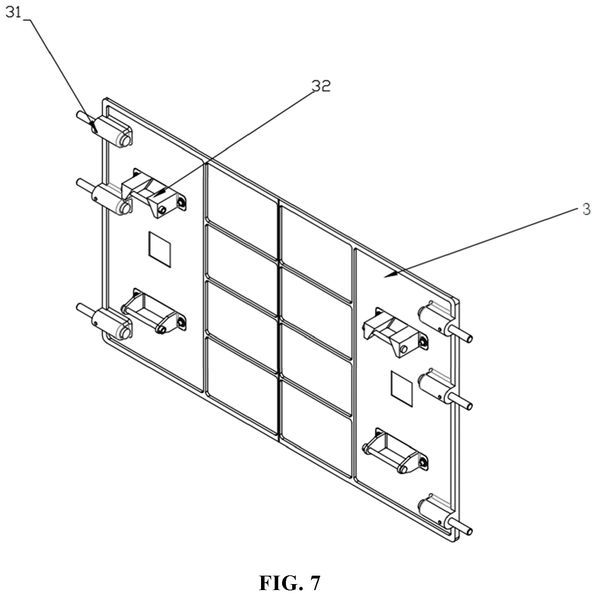

In one embodiment, referring to Figs. 6 and 7, a plurality of connecting members 21 are provided on the door frame 2, the plurality of connecting members 21 being symmetrically distributed on two sides of the door frame 2;
a plurality of mating members 31 are provided on the door body 3, the plurality of mating members 31 being symmetrically distributed on two sides of the door body 3 and protruding from side edges of the door body 3.

In this embodiment, referring to Fig. 5, some of the plurality of connecting members 21 are located on the left side of the door frame 2, and the remaining connecting members 21 are located on the right side of the door frame 2, and the connecting members 21 on the left side and the connecting members 21 on the right side are left-right symmetric; some of the plurality of mating members 31 are provided on the left side of the door body 3, and the remaining mating members 31 are provided on the right side of the door body 3, and the mating members 31 on the left side and the mating members 31 on the right side are left-right symmetric, so that the mating members 31 on the left side are in limiting fit with the connecting members 21 on the left side, and at the same time the mating members 31 on the right side are in limiting fit with the connecting members 21 on the right side, thereby avoiding deviation of the door body 3 relative to the door frame 2 on the basis of ensuring the connection stability of the door body 3 and the door frame 2.

In another embodiment, among the plurality of connecting members 21, the connecting members 21 on the left side and the connecting members 21 on the right side may also be arranged in a staggered manner; similarly, among the plurality of mating members 31, the mating members 31 on the left side and the mating members 31 on the right side are arranged in a staggered manner. The mating members 31 on the left side are in limiting fit with the connecting members 21 on the left side, while the mating members 31 on the right side are in limiting fit with the connecting members 21 on the right side, which can also ensure the positional accuracy of the door body 3 connected to the door frame 2.

In one embodiment, as shown in Figs. 6 and 7, the connecting member 21 is a hook, and the mating member 31 is a mating rod;
a groove is formed on the hook, one end of the mating rod being fixed to a peripheral side of the door body 3, the other end of the mating rod protruding from the side edge of the door body 3 and being embedded and fitted in the groove.

In this embodiment, the hook is formed with a groove having an opening facing the top of the storage unit. The other end of the mating rod protrudes from the side edge of the door body 3 and forms a limiting portion. When the door body 3 approaches the door frame 2, the door body 3 drives the limiting portion to fall into the groove from top to bottom, so as to achieve the embedding and fitting of the limiting portion with the groove, ensuring the stability of the door body 3 connected to the door frame 2.

In addition, when the door body 3 is detached from the door frame 2, it is only necessary to pull the door body 3 upward to achieve disengagement of the limiting portion from the groove, facilitating the detachment of the door body 3.

In one embodiment, the connecting member 21 is a connecting block, and the mating member 31 is an insertion rod;
an insertion hole is provided on the connecting block, one end of the insertion rod being fixed to a peripheral side of the door body 3, the other end of the insertion rod protruding from the side edge of the door body 3 and being inserted and fitted in the insertion hole.

In this embodiment, an insertion hole with an opening facing the top of the storage unit is formed on the connecting block, with the other end of the insertion rod protruding from the side edge of the door body 3 and forming an insertion portion. When the door body 3 approaches the door frame 2, the door body 3 drives the insertion portion to insert into the insertion hole from top to bottom, so as to achieve the embedding and fitting of the insertion portion with the insertion hole; moreover, the insertion hole can provide guidance and limiting for the movement of the door body 3 approaching the door frame 2, ensuring the stability of the door body 3 connected to the door frame 2.

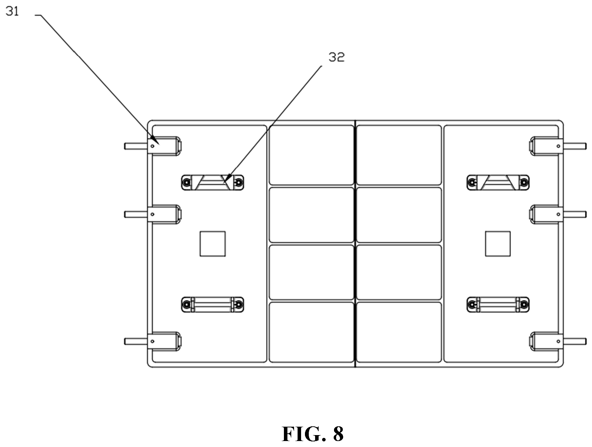

In one embodiment, referring to Figs. 7 and 8, a connecting shaft 32 is provided on the door body 3, the connecting shaft 32 being adapted to be connected to a stacker crane, so as to cause the door body 3 to switch between an open position and a closed position;
when the door body 3 is in the open position, the mating member 31 is disengaged from the connecting member 21; and when the door body 3 is in the closed position, the mating member 31 is in limiting fit with the connecting member 21.

In this embodiment, in order to facilitate the detachment of the door body 3 from the door frame 2, one or more connecting shafts 32 may be provided on a side of the door body 3 facing away from the frame 1, the connecting shafts 32 being spaced apart and connected to the door body 3 by fixing blocks at two ends thereof, so as to form a gripping gap between the connecting shaft 32 and the door body. A hook or a robotic arm on the stacker crane can extend into the gripping gap and be connected to the connecting shaft 32, so as to drive the door body 3 via the stacker crane to switch between the open position and the closed position.

To take out products from the frame 1 through the opening 11 or place products into the frame 1 through the opening 11, the connecting shaft 32 on the door body 3 may be connected to the stacker crane to drive the mating member 31 to disengage from the connecting member 21, thereby moving the door body 3 to the open position to release the closure of the opening 11. At this time, the opening 11 communicates the space inside the frame 1 with the external space, facilitating the loading and unloading of products in the frame 1.

In one embodiment, referring to Fig. 3, a bearing structure 4 is provided within the frame 1, the bearing structure 4 being used for bearing a battery tray 5.

In this embodiment, the storage unit is used for storing batteries. In the battery production process, batteries need to undergo a standing process for a certain period of time under specific temperature requirements, which imposes higher demands on the thermal insulation and sealing performance of the storage unit.

In the storage unit provided by the embodiment of the present disclosure, the bearing structure 4 is provided within the frame 1, and the batteries are placed in the frame 1 via the battery trays 5. When the opening 11 is closed by the door body 3, the sealing performance and thermal insulation performance inside the storage unit can be improved, ensuring the performance stability of the batteries in the storage unit.

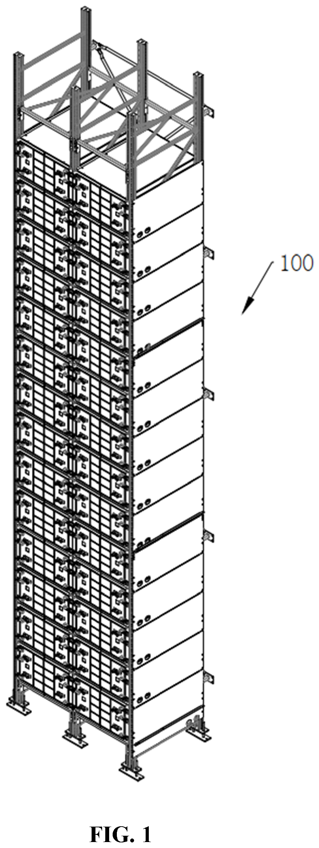

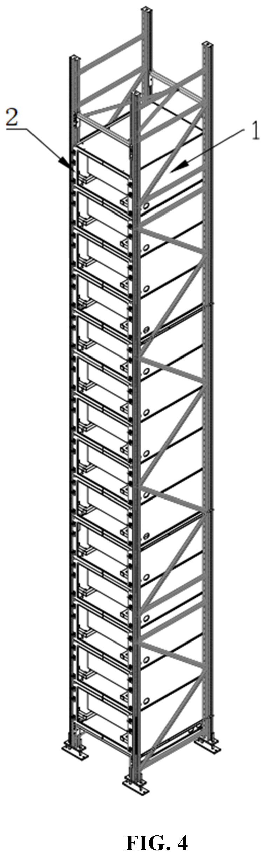

An embodiment of the present disclosure provides a rack 100. Referring to Figs. 1 to 4, the rack 100 comprises a plurality of storage units, the storage units being the storage units described above.

In this embodiment, referring to Fig. 1, the plurality of storage units are assembled together in a longitudinal and transverse arrangement, so as to increase the storage capacity of the rack 100; the door body 3 of the storage unit is detachably connected to the door frame 2 so as to close the opening 11, thereby being capable of improving the sealing performance and thermal insulation performance inside the storage unit.

In one embodiment, referring to Fig. 3, the plurality of openings 11 of the plurality of storage units are located on the same side of the rack;
the plurality of door frames 2 are correspondingly fixed to the plurality of openings 11, and adjacent door frames 2 abut against each other.

In this embodiment, the same side of the rack has the plurality of openings 11 of the plurality of storage units. For example, the plurality of openings 11 are arranged vertically, or the plurality of openings 11 are arranged horizontally, or the plurality of openings 11 are arranged in a crisscross pattern, so as to facilitate the taking and placing of products in the plurality of storage units on the same side of the rack.

The side of the rack having the plurality of openings 11 forms a coverage surface. The plurality of door frames 2 are correspondingly fixed to the plurality of openings 11, and adjacent door frames 2 abut against each other, that is, the plurality of door frames 2 can cover the coverage surface of the rack, preventing gaps between adjacent door frames 2 from affecting the sealing performance of the internal space of the storage units, and ensuring the effect of closing the openings 11 by the door frames 2 and the door bodies 3.

In one embodiment, referring to Figs. 3 and 6, the plurality of door bodies 3 are correspondingly connected to respective sides of the plurality of door frames 2 facing away from the frame 1, and adjacent door bodies 3 are spaced apart from each other;
a door opening 22 is provided within the door frame 2, the area of the door frame 2 being greater than the area of the opening 11, the area of the door body 3 being greater than the area of the door opening 22, and the door body 3 being capable of closing the door opening 22.

In this embodiment, the plurality of door bodies 3 are correspondingly connected to the sides of the plurality of door frames 2 facing away from the frame 1, that is, the door frames 2 and the door bodies 3 are arranged in staggered layers and are located in different planes. The outer peripheral dimension of the door frame 2 is larger than the dimension of the opening 11, so that the door frame 2 covers the edge of the opening 11; at the same time, the outer peripheral dimension of the door body 3 is larger than the dimension of the door opening 22, so that the door body 3 closes the door opening 22.

Moreover, the plurality of door bodies 3 are spaced apart from each other, so that the opening and closing of adjacent door bodies 3 in the plurality of storage units do not affect each other, ensuring the independence of the opening and closing of the door body 3 in each storage unit.

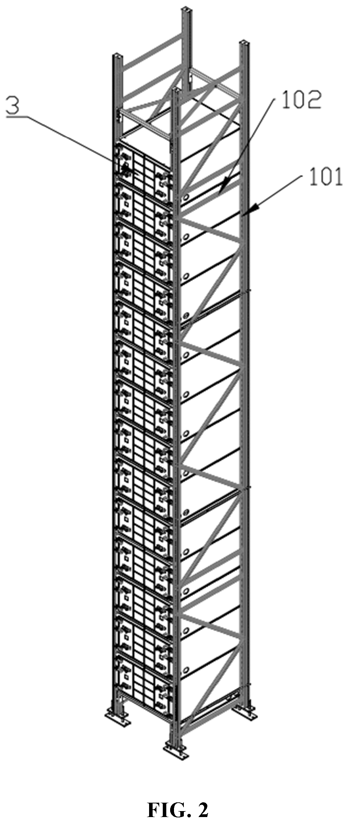

In one embodiment, referring to Fig. 2, the rack 100 comprises a plurality of vertical columns 101 and a plurality of crossbeams 102, the plurality of vertical columns 101 and the plurality of crossbeams 102 being connected to each other in a crisscross pattern to form the frame 1.

In this embodiment, the frames 1 of the plurality of storage units can be formed by connecting a plurality of larger-sized vertical columns 101 and a plurality of crossbeams 102, which can ensure the consistency of the arrangement of the frames 1 in the plurality of storage units and improve the compactness of the plurality of storage units combined together.

In addition, the rack 100 may further comprise a plurality of inclined beams, the plurality of inclined beams being connected between the vertical columns 101 and the crossbeams 102, so as to improve the structural stability of the rack 100.

An embodiment of the present disclosure provides a warehousing system. The warehousing system comprises a stacker crane and the rack described above, the stacker crane being capable of being connected to the door body 3 and causing the door body 3 to switch between an open position and a closed position.

In this embodiment, the stacker crane is capable of transferring products in the rack; specifically, when it is necessary to take out products from the frame 1 through the opening 11 or place products into the frame 1 through the opening 11, the stacker crane can be used to connect to the connecting shaft 32 on the door body 3 and drive the mating member 31 to disengage from the connecting member 21, so as to move the door body 3 to the open position to release the closure of the opening 11. At this time, the opening 11 communicates the space inside the frame 1 with the external space, so as to facilitate the taking and placing of products in the frame 1 and the transfer of products.

In addition, the plurality of storage units in the rack are independently sealed, and the door bodies 3 of the plurality of storage units can be arranged on the same side, so that when facilitating the stacker crane in performing an opening operation on the door bodies 3, the opening and closing of adjacent door bodies 3 in the plurality of storage units do not affect each other, ensuring the independence of the opening and closing of the door body 3 in each storage unit.

Although some specific embodiments of the present disclosure have been described in detail by way of examples, those skilled in the art should understand that the above examples are only for illustration and are not intended to limit the scope of the present disclosure. Those skilled in the art should understand that the above embodiments can be modified without departing from the scope and spirit of the present disclosure. The scope of the present disclosure is defined by the appended claims.

## Claims

1. A storage unit for a rack, comprising:
a frame (1), one side of the frame (1) forming an opening (11);
a door frame (2), the door frame (2) being fixed to the opening (11); and
a door body (3), the door body (3) being detachably connected to the door frame (2), so as to form a closure of the opening (11) by means of the door frame (2) and the door body (3).

2. The storage unit according to claim 1, wherein a connecting member (21) is provided on the door frame (2), a mating member (31) is provided on the door body (3), and the mating member (31) is in limiting fit with the connecting member (21).

3. The storage unit according to claim 1 or 2, wherein a plurality of connecting members (21) are provided on the door frame (2), the plurality of connecting members (21) being symmetrically distributed on two sides of the door frame (2); and
a plurality of mating members (31) are provided on the door body (3), the plurality of mating members (31) being symmetrically distributed on two sides of the door body (3) and protruding from side edges of the door body (3).

4. The storage unit according to claim 2 or 3, wherein the connecting member (21) is a hook, and the mating member (31) is a mating rod; and
a groove is formed on the hook, one end of the mating rod being fixed to a peripheral side of the door body (3), the other end of the mating rod protruding from the side edge of the door body (3) and being embedded and fitted in the groove.

5. The storage unit according to any one of claims2 to 4, wherein
the connecting member (21) is a connecting block, and the mating member (31) is an insertion rod; and
an insertion hole is provided on the connecting block, one end of the insertion rod being fixed to a peripheral side of the door body (3), the other end of the insertion rod protruding from the side edge of the door body (3) and being inserted and fitted in the insertion hole.

6. The storage unit according to any one of claims2 to 5, wherein a connecting shaft (32) is provided on the door body (3), the connecting shaft (32) being adapted to be connected to a stacker crane, so as to cause the door body (3) to switch between an open position and a closed position; and
when the door body (3) is in the open position, the mating member (31) is disengaged from the connecting member (21); and when the door body (3) is in the closed position, the mating member (31) is in limiting fit with the connecting member (21).

7. The storage unit according to any one of claims 1 to 6, wherein a bearing structure (4) is provided within the frame (1), the bearing structure (4) being used for bearing a battery tray (5).

8. A rack (100), comprising a plurality of storage units, the storage units being the storage unit according to any one of claims 1 to 7.

9. The rack (100) according to claim 8, wherein the plurality of openings (11) of the plurality of storage units are located on the same side of the rack, and
the plurality of door frames (2) are correspondingly fixed to the plurality of openings (11), wherein adjacent door frames (2) abut against each other.

10. The rack (100) according to claim 8 or 9, wherein the plurality of door bodies (3) are correspondingly connected to respective sides of the plurality of door frames (2) facing away from the frame (1), wherein adjacent door bodies (3) are spaced apart from each other; and
wherein a door opening (22) is provided within the door frame (2); the area of the door frame (2) is greater than the area of the opening (11), the area of the door body (3) is greater than the area of the door opening (22), and the door body (3) is capable of closing the door opening (22).

11. The rack (100) according to any one of claims 8 to10, wherein the rack comprises a plurality of vertical columns (101) and a plurality of crossbeams (102), the plurality of vertical columns (101) and the plurality of crossbeams (102) being connected to each other in a crisscross pattern to form the frame (1).

12. A warehousing system, comprising a stacker crane and the rack according to any one of claims 8 to 11, the stacker crane being capable of being connected to the door body (3) and causing the door body (3) to switch between an open position and a closed position.
